# EUROPÄISCHE PATENTSCHRIFT

(11) **EP 2 528 793 B1**
(45) Veröffentlichungstag und Bekanntmachung des Hinweises auf die Patenterteilung: **18.03.2015**
(21) Anmeldenummer: 11701003.3
(22) Anmeldetag: 15.01.2011
(51) Int. Cl.: B60W 10/06, B60W 10/08, B60W 20/00, B60K 6/442, B60K 6/52

(54) **VERFAHREN ZUM BETREIBEN EINES HYBRIDANTRIEBS EINES FAHRZEUGS**
METHOD FOR OPERATING A HYBRID DRIVE OF A VEHICLE
PROCÉDÉ PERMETTANT DE FAIRE FONCTIONNER UN ENTRAÎNEMENT HYBRIDE D'UN VÉHICULE

(30) Priorität: 30.01.2010 DE 102010006305
(43) Veröffentlichungstag der Anmeldung: 05.12.2012
(73) Patentinhaber: Audi AG, 85045 Ingolstadt (DE)
(72) Erfinder: MAIER, Ruben, 89542 Herbrechtingen (DE); BRUNNER, Harald, 91171 Greding (DE); KRUSE, Alexander, 85051 Ingolstadt (DE)
(86) Internationale Anmeldenummer: PCT/EP2011/000161
(87) Internationale Veröffentlichungsnummer: WO 2011/091957

(56) Entgegenhaltungen:
- DE-A1- 19 814 402
- DE-A1-102006 044 427
- DE-A1-102008 053 505
- US-A1- 2009 062 061
- US-A1- 2009 143 188

## Beschreibung

Die Erfindung betrifft ein Verfahren zum Betreiben eines Hybridantriebs eines Kraftfahrzeugs nach dem Oberbegriff des Anspruchs 1.

Üblicherweise ist ein Hybridantrieb eines Kraftfahrzeugs als Parallelhybrid oder leistungsverzweigter Hybrid ausgeführt. Der Antriebsstrang des Kraftfahrzeugs weist dazu für gewöhnlich eine Brennkraftmaschine und eine Elektromaschine auf. Beim leistungsverzweigten Hybrid unterstützt die Elektromaschine zum einen die Brennkraftmaschine beim Antreiben des Kraftfahrzeugs, zum anderen versorgt die Elektromaschine in einem Rekuperationsbetrieb einen elektrischen Speicher und/oder ein elektrisches Bordnetz des Kraftfahrzeugs mit der erforderlichen elektrischen Energie.

Ferner kann die Elektromaschine in einem Hybridantrieb dazu genutzt werden, ein verzögertes Ansprechen der Brennkraftmaschine in einem Instationärbetrieb auf eine Momentvorgabe hin zu kompensieren, d.h. die Elektromaschine unterstützt die Verbrennungsmaschine zum schnelleren Erreichen einer Momentvorgabe des Hybridantriebs. Ein verzögertes Ansprechen der Brennkraftmaschine tritt bei turboaufgeladenen Dieselmotoren und insbesondere bei turboaufgeladenen Benzinmotoren beim sogenannten Turboloch auf. Bei Ottomotoren basiert das verzögerte Ansprechen und somit ein Instationärbetrieb auf der begrenzten Dynamik des Luftpfades für die Ansaugluft. Ottomotoren und Dieselmotoren besitzen meist eine elektronische Drosselkappe zur Luftmassenstromregulierung. Das Fahrpedal ist von dieser elektronischen Drosselklappe mechanisch entkoppelt. Die Saugrohrtotzeit, der verzögerte Ladedruckaufbau des Turboladers und dynamische Füllungseffekte im Luftpfad lassen eine hochdynamische Einstellung eines vorgegebenen Luftmassenstromes und des dadurch erzeugten Brennkraftmaschinendrehmomentes nicht zu. Durch einen Eingriff in den Zündwinkelpfad kann das Ansprechverhalten der Brennkraftmaschine verbessert werden, jedoch verschlechtert sich dabei der Wirkungsgrad der Brennkraftmaschine, wodurch der Kraftstoffverbrauch und die Abgasemission erhöht werden.

Die Drehmomentansteuerung einer Elektromaschine weist eine im Vergleich zu Brennkraftmaschinen sehr viel größere Dynamik auf. So beschreibt die DE 10 2006 044 427 A1 ein Verfahren zum Betreiben eines Hybridantriebs eines Kraftfahrzeugs, bei dem ein Instationärbetrieb der Brennkraftmaschine durch eine Elektromaschine ausgeglichen wird. Nachteilig kann bei diesem Verfahren ein dynamischer Antriebsstrang nur so lange gewährleistet werden, bis die Elektromaschine an ihre Systemgrenzen stößt. Aus der US 2009/0143188 A ist ein ähnliches Verfahren bekannt.

Aus der DE 198 14 402 A ist ein gattungsgemäßes Verfahren zum Betreiben eines Hybridantriebes eines Kraftfahrzeuges bekannt. Der Hybridantrieb weist eine Brennkraftmaschine und eine erste Elektromaschine auf. Zudem erzeugt der Hybridantrieb auf eine Sollmomentvorgabe ein das Kraftfahrzeug antreibendes Summenmoment, wobei in einem, während einer Änderung der Sollmomentvorgabe um einen Wert erfolgenden Instationärbetrieb das Summenmoment durch Aufsummieren eines von der Brennkraftmaschine erzeugten Antriebsmoments und eines von der ersten Elektromaschine erzeugten Antriebsmoments erzeugt wird. Der Hybridantrieb weist eine zweite Elektromaschine auf, die während des Instationärbetriebs zur Erzeugung des Summenmoments der Brennkraftmaschine und der ersten Elektromaschine zugeschaltet wird. Aus der US 2009/0062061 A ist ein Hybridantrieb bekannt, der eine Elektromaschine aufweist, die zugeschaltet wird, um die Dynamik zu verbessern.

Die Aufgabe der Erfindung besteht darin, ein Verfahren bereitzustellen, durch welches ein Hybridantrieb, insbesondere im Instationärbetrieb der Brennkraftmaschine, weiter verbessert und insbesondere dessen Dynamik erhöht wird.
Die Aufgabe ist durch die Merkmale des Patentanspruches 1 gelöst. Vorteilhafte Weiterbildungen der Erfindung sind in den abhängigen Ansprüchen offenbart.

Gemäß dem kennzeichnenden Teil des Patentanspruches 1 wird zumindest eine zweite Elektromaschine vorgesehen, die ein Antriebsmoment erzeugt, das in einem Instationärbetrieb zusammen mit den Antriebsmomenten der Brennkraftmaschine und der ersten Elektromaschine zu dem Summen-Moment aufsummiert wird. Auf diese Weise kann die Dynamik des Antriebsstrangs auch dann erhalten werden, wenn eine der beiden Elektromaschinen den Instationärbetrieb der Brennkraftmaschine alleine nicht ausgleichen kann, etwa weil eine Systemgrenze der Elektromaschine erreicht wird.

Insbesondere können die Brennkraftmaschine und die erste Elektromaschine einen Achsantrieb, insbesondere einen Achsantrieb für eine Vorderachse, des Kraftfahrzeugs bilden, bei dem die Brennkraftmaschine und die erste Elektromaschine über ein gemeinsames Getriebe abtreiben. Bevorzugt kann die zweite Elektromaschine unabhängig von der ersten Elektromaschine und der Brennkraftmaschine einen Achsantrieb, insbesondere einen Achsantrieb für eine Hinterachse, bilden. Somit können die erste und die zweite Elektromaschine unabhängig voneinander ein Moment zum Antrieb des Fahrzeugs beitragen, wodurch ein besonders effizienter und dynamischer Allradantrieb des Kraftfahrzeugs umgesetzt sein kann.

Erfindungsgemäß wird die zweite Elektromaschine zu Beginn des Instationärintervalls um einen Zeitversatz zeitverzögert nach Aktivierung der ersten Elektromaschine zugeschaltet, oder steigt dessen Antriebsmoment mit Bezug auf das von der ersten Elektromaschine erzeugte Antriebsmoment um den Zeitversatz zeitverzögert an. Ferner wird die zweite Elektromaschine am Ende des Instationärintervalls gegenüber der ersten Elektromaschine mit einem Zeitversatz vorauseilend deaktiviert, oder fällt dessen Antriebsmoment mit Bezug auf das von der ersten oder zweiten Elektromaschine erzeugte Antriebsmoment um den Zeitversatz zeitverzögert ab. Das zeitverzögerte Aktivieren oder Deaktivieren der zweiten Elektromaschine kann beispielsweise wirkungsgradabhängig erfolgen.

Insbesondere kann die erste und/oder zweite Elektromaschine vor und/oder nach dem Instationärintervall im Schubbetrieb oder Rekuperationsbetrieb betrieben werden oder deaktiviert sein, und/oder das von dem Hybridantrieb erzeugte Summen-Moment vor und/oder nach dem Instationärintervall durch das Antriebsmoment der Brennkraftmaschine und/oder der ersten Elektromaschine und/oder der zweiten Elektromaschine gebildet sein. Somit kann die erste und/oder zweite Elektromaschine vor und/oder nach dem Instationärintervall unterstützend oder ausschließlich für den Vortrieb des Kraftfahrzeuges genutzt werden. Durch den Schubbetrieb bzw. den Rekuperationsbetrieb der Elektromaschinen kann der während des Instationärbetriebs der Verbrennungsmaschine verbrauchte Energiebetrag wirkungsgradbehaftet wieder einem Energiespeicher zugeführt werden. Des Weiteren kann die im Schubbetrieb bzw. Rekuperationsbetrieb gewonnene elektrische Energie wirkungsgradbehaftet zur Versorgung des Bordnetzes verwendet werden.

Bevorzugt kann eine Steuereinrichtung zur Ansteuerung der Brennkraftmaschine, der ersten Elektromaschine und der zweiten Elektromaschine jeweils zugehörige erste bis dritte Soll-Momente berechnen, und zwar insbesondere auf Basis eines Betriebszustandes der Brennkraftmaschine, der ersten Elektromaschine und/oder der zweiten Elektromaschine. Durch die Berücksichtigung der Betriebszustände der einzelnen Aggregate bei der Berechnung der Soll-Momente kann die Effizienz des Hybridantriebs gesteigert werden. Bei der Berechnung der Soll-Momente können zudem die Wirkungsgrade der Elektromaschinen, die Temperatur der Leistungselektronik, die Temperatur der Batterie und/oder der Ladezustand der Batterie berücksichtigt werden.

In einer konkreten Ausführung kann die Steuereinrichtung die ersten bis dritten Soll-Momente in Abhängigkeit wenigstens eines mittels eines Sensors bestimmten Parameters, insbesondere eines Gaspedalwegs, berechnen. Somit kann eine benutzerseitige Momentanforderung, etwa bei einem Überholmanöver, auf direktem Wege durch eine steuerungstechnisch einfache Lösung in die Berechnung des Soll-Moments mit einfließen.

Bei Verwendung einer Geschwindigkeitsregelanlage, insbesondere mit Abstandseinhaltung, etwa adpative cruise control, kann die Steuereinrichtung die ersten bis dritten Soll-Momente in Abhängigkeit eines durch die Geschwindigkeitsregelanlage ermittelten Parameters berechnen. Dabei kann der Parameter beispielsweise ein Abstand zu einem vorausfahrenden Fahrzeug sein, welcher durch einen Radarsensor ermittelt wird.

Insbesondere können die Soll-Momente durch einen festgelegten oder von der Steuereinrichtung berechneten Grenzwert begrenzt sein. Auf diese Weise kann eine Beschädigung der Antriebsaggregate, insbesondere der Elektromaschinen, durch Überlastung steuerungstechnisch einfach verhindert werden.

In einer konkreten Ausführung kann der Grenzwert von der Steuereinrichtung in Abhängigkeit wenigstens eines mittels eines Sensors bestimmten Parameters, insbesondere einer Temperatur eines Energiespeichers, eines Ladezustands eines Energiespeichers oder einer Temperatur einer Leistungselektronik, berechnet werden. Somit kann zum einen das Vorhandensein einer ausreichenden Energiemenge in einem Energiespeicher, etwa einer Batterie, gewährleistet sein. Zum anderen kann ein Überhitzen des Energiespeichers beziehungsweise der Leistungselektronik der Elektromaschinen verhindert werden. Gerade die Leistungselektronik der Elektromaschinen kann aufgrund der hohen Stromflüsse anfällig gegenüber Überhitzungsschäden sein. Durch eine Berücksichtigung der Temperatur der Leistungselektronik beim Berechnen eines Grenzwertes des Soll-Moments werden derartige Schäden verhindert.

Nachfolgend ist ein Ausführungsbeispiel der Erfindung anhand der beigefügten Figuren beschrieben.

Es zeigen:
- Fig. 1: in einer Prinzipdarstellung einen Hybridantrieb eines Kraftfahrzeugs; und
- Fig. 2 und 3: jeweils in einem Zeit-Moment-Diagramm die von einer Steuereinrichtung berechneten Soll-Momente für eine Brennkraftmaschine und zwei Elektromaschinen.

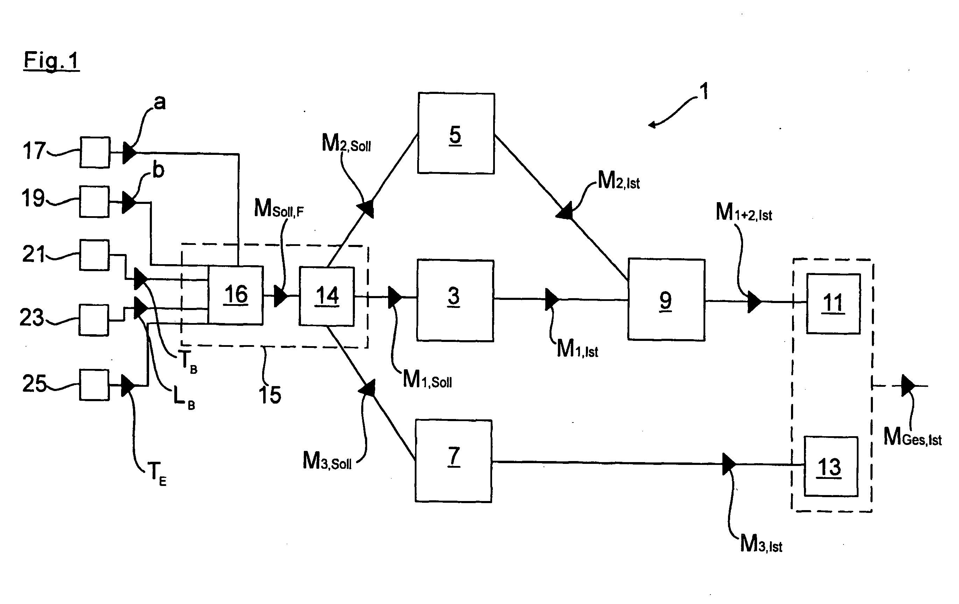

In der Fig. 1 ist in einer schematischen Prinzipdarstellung ein Hybridantrieb 1 eines Kraftfahrzeugs gezeigt. Wie aus der Fig. 1 hervorgeht, weist der Hybridantrieb 1 eine Brennkraftmaschine 3, eine erste Elektromaschine 5 und eine zweite Elektromaschine 7 auf.

Die Brennkraftmaschine 3 sowie die erste Elektromaschine 5 übertragen jeweils ein Ist-Moment M_{1,Ist}, M_{2,Ist} an ein Getriebe 9, durch welches ein Antriebsmoment M_{1+2,Ist} für eine Vorderachse 11 des Fahrzeugs erzeugt wird. Die zweite Elektromaschine 7 überträgt ein Antriebsmoment M_{3,Ist} direkt an eine Hinterachse 13. Durch Aufsummieren des Antriebsmoments M_{1+2,Ist} und des Antriebsmoments M_{3,Ist} wird ein das Kraftfahrzeug antreibendes Summen-Moment M_{Ges,Ist} erhalten.

Wie aus der Fig. 1 ersichtlich ist, sind die Brennkraftmaschine 3 sowie die erste und zweite Elektromaschine 5, 7 mit einer Auswerteeinrichtung 14 einer Steuereinrichtung 15 steuerungstechnisch verbunden. Ferner geht aus der Fig. 1 hervor, dass eine Soll-Momentberechnungseinheit 16 der Steuereinrichtung 15 signaltechnisch mit einem Sensor 17 für einen Gaspedalweg a, einer Geschwindigkeitsregelanlage mit Abstandssensor 19, einem Sensor 21 für eine Batterietemperatur T_{B}, einem Sensor 23 für einen Batterieladezustand L_{B} und einem Sensor 25 für eine Leistungselektroniktemperatur T_{E} verbunden ist.

Gemäß der Fig. 1 berechnet die Soll-Momentberechnungseinheit 14 ein Soll-Moment M_{Soll,F} des Hybridantriebs 1 basierend auf dem vom Sensor 17 ermittelten Gaspedalweg a bzw. einem von der Geschwindigkeitsregelanlage 19 übertragenen Parameter b. Bei Verwendung einer Geschwindigkeitsregelanlage 19 mit Abstandseinhaltung kann der übertragene Parameter b beispielsweise ein durch einen Radarsensor ermittelter Abstand zu einem vorausfahrenden Fahrzeug sein.

Wie aus der Fig. 1 ersichtlich ist, erzeugt die Auswerteeinrichtung 14 auf Basis des Soll-Moments M_{Soll,F} in Abhängigkeit der Betriebszustände der Brennkraftmaschine 3 sowie der Elektromaschinen 5, 7 erste bis dritte Soll-Momente M_{1,Soll}, M_{2,Soll}, M_{3,Soll}. Die ersten bis dritten Soll-Momente M_{1,Soll}, M_{2,Soll}, M_{3,Soll} werden als Steuersignale jeweils an eine Steuereinrichtung der Brennkraftmaschine 3 und an Steuereinrichtungen der Elektromaschinen 5, 7 übermittelt. Die Brennkraftmaschine 3 und die Elektromaschinen 5, 7 erzeugen dann in Abhängigkeit der Soll-Momente M_{1,Soll}, M_{2,Soll}, M_{3,Soll} die Ist-Momente M_{1,Ist.} M_{2,Ist}, M_{3,Ist}.

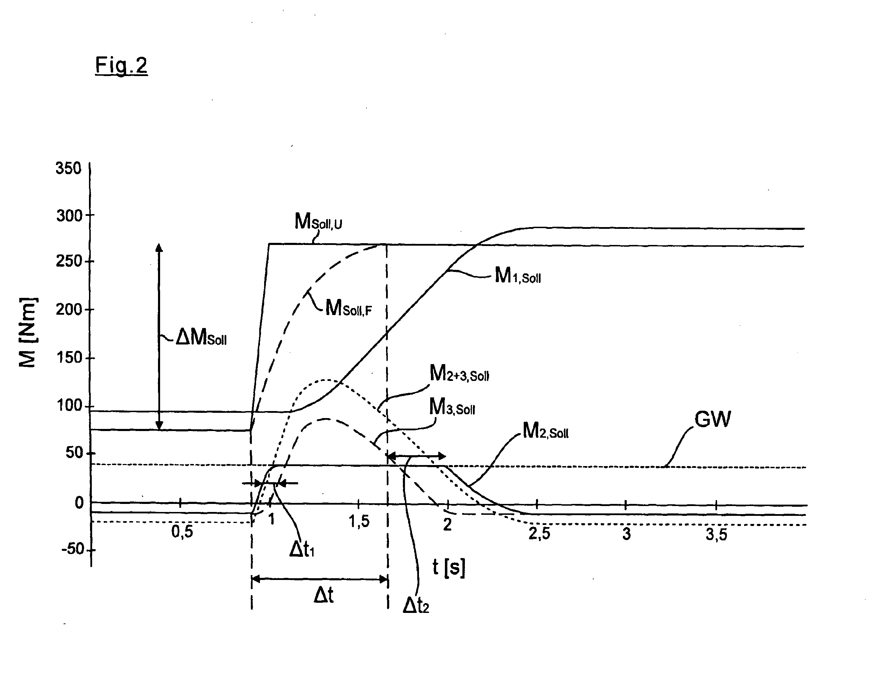

Die Fig. 2 zeigt einen beispielhaften zeitlichen Verlauf der von der Steuereinrichtung 15 berechneten und an die Brennkraftmaschine 3 sowie die Elektromaschinen 5, 7 weitergeleiteten Soll-Momente M_{1,Soll}. M_{2,Soll}, M_{3,Soll}. Ferner ist in der Fig. 2 der Verlauf eines ungefilterten Soll-Moments M_{Soll,U} sowie eines gefilterten Soll-Moments M_{Soll,F} des Hybridantriebs 1 dargestellt.

Das ungefilterte Soll-Moment M_{Soll,U} entspricht dem benutzerseitig durch Betätigung eines Gaspedals angeforderten Moment. Alternativ kann das ungefilterte Soll-Moment M_{Soll,U} einem durch die Geschwindigkeitsregelanlage 19 angeforderten Moment entsprechen. Das ungefilterte Soll-Moment M_{Soll,U} wird von der Soll-Momentberechnungseinheit 16 der Steuereinrichtung 15 unter Berücksichtigung der maximalen Umsetzbarkeit des Hybridantriebs 1 in das gefilterte Soll-Moment M_{Soll},_{F} konvertiert. Der zeitliche Verlauf des gefilterten Soll-Moments M_{Soll,F} des Hybridantriebs 1 entspricht dem zeitlichen Verlauf der aufsummierten Soll-Momente M_{1,Soll}, M_{2,Soll}, M_{3,Soll} der Brennkraftmaschine 3 und der beiden Elektromaschinen 5, 7. Eine Summation der Soll-Momente M_{2,Soll}, M_{3,Soll} der beiden Elektromaschinen 5, 7 resultiert in einem Soll-Momentes M_{2+3,Soll} dessen zeitlicher Verlauf ebenfalls in der Fig. 2 dargestellt ist.

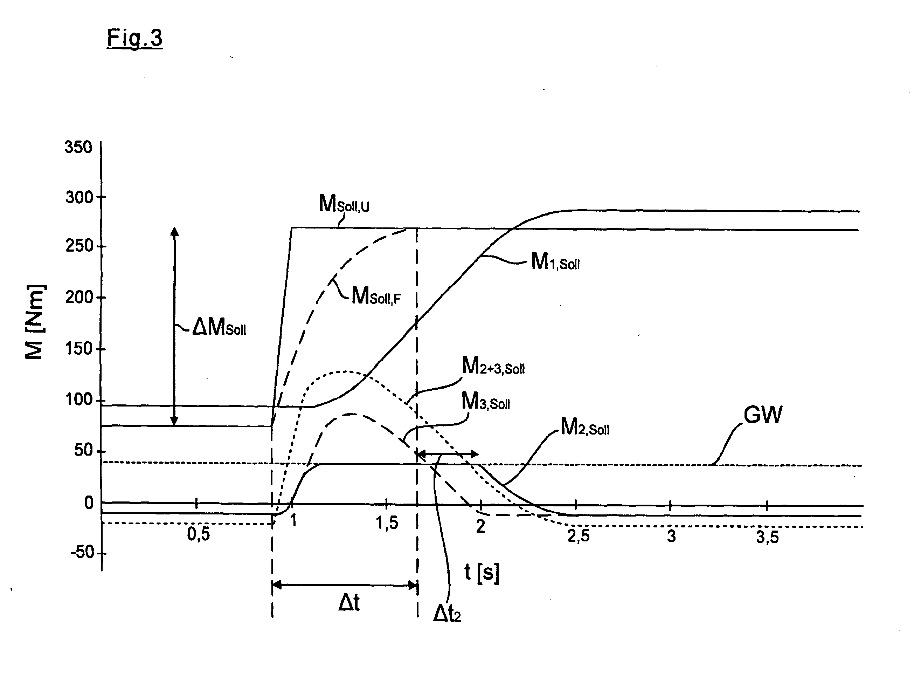

In den Diagrammen der Fig. 2 und 3 ist aus Gründen der Übersichtlichkeit auf die Darstellung der Zeitverläufe der Ist-Antriebsmomente M_{1, Ist}, M_{2, Ist}, M₂₊₃, _{Ist}, sowie M_{Ges, Ist} verzichtet. Diese Ist-Antriebsmomente folgen in ihrem Zeitverlauf geringfügig zeitverzögert den Zeitverläufen der korrespondierenden Soll-Antriebsmomente M_{1, Soll}, M_{2, Soll}, M_{3, Soll}, M₂₊₃, _{Soll}, sowie M_{Soll, F}.

Gemäß der Fig. 2 steigt bei einer Erhöhung des ungefilterten Soll-Moments M_{Soll,U} um einen Wert ΔM_{Soll} das gefilterte Soll-Moment M_{Soll,F} in einem Instationärintervall Δt bis zu einem entsprechenden Beharrungswert an. Zum Erreichen des Beharrungswertes unterstützen dabei die Soll-Momente M_{2,Soll}, M_{3,Soll} der beiden Elektromaschinen 5, 7 das Soll-Moment M_{1,Soll} der Verbrennungsmaschine 3. Die Aufteilung auf die Soll-Momente M_{2,Son}, M_{3,Soll} erfolgt mittels einer Effizienz- und Grenzwertbetrachtung der beiden Elektromaschinen 5, 7.

Aus der Fig. 2 geht hervor, dass das Soll-Moment M_{2,Soll} der ersten Elektromaschine 5 einen Grenzwert GW aufweist, welcher eine Systemgrenze der ersten Elektromaschine 5 darstellt. Der Grenzwert GW wird von der Steuereinrichtung 15 anhand der Signale des Sensors 21 für die Batterietemperatur T_{B}, des Sensors 23 für den Batterieladezustand L_{B} und des Sensors 25 für die Leistungselektroniktemperatur T_{E} berechnet.

Wie aus der Fig. 2 ferner hervorgeht steigt das Soll-Moment M_{3,Soll} der zweiten Elektromaschine 7 zu Beginn des Instationärintervalls Δt mit einem Zeitversatz Δt₁ mit Bezug auf das Soll-Moment M_{2,Soll} der ersten Elektromaschine 5 zeitverzögert an. Am Ende des Instationärintervalls Δt fällt das Sollmoment M_{3,Soll} der zweiten Elektromaschine 7 mit einem Zeitversatz Δt₂ mit Bezug auf das Soll-Moment M_{2,Soll} der ersten Elektromaschine 5 vorauseilend ab.

Vor bzw. nach dem Instationärintervall Δt werden die beiden Elektromaschinen 5, 7 im Schubbetrieb betrieben. Durch Reibung und magnetische Gegenkräfte sind die Soll-Momente M_{2,Soll}, M_{3,Soll} in diesem Bereich negativ. Alternativ können die beiden Elektromaschinen 5, 7 vor bzw. nach dem Instationärintervall Δt auch aktiv zur Rekuperation genutzt werden.

Wie bereits oben erwähnt, wird nach Ablauf des Zeitversatzes Δt₁ gemäß dem Diagramm aus der Fig. 2 die zweite Elektromaschine 7 zeitverzögert zugeschaltet. Die Zuschaltung der zweiten Elektromaschine 7 erfolgt dabei zu einem Zeitpunkt, bei dem die Steuereinrichtung 15 feststellt, dass die erste Elektromaschine 5 an ihre Systemgrenze stoßen wird. Durch Zuschaltung der zweiten Elektromaschine 5 wird daher sichergestellt, dass das gefilterte Gesamt-Sollmoment M_{Soll, F} durch alle drei Maschinen 3, 5, 7 erreicht wird.

Die im Diagramm der Fig. 3 veranschaulichte Betriebsstrategie entspricht im Wesentlichen der in der Fig. 2. Im Unterschied zur Fig. 2 erfolgt jedoch die Zuschaltung der zweiten Elektromaschine 7 nicht um einen Zeitversatz Δt₁ zeitverzögert, sondern zeitgleich mit der ersten Elektromaschine 5, um zu vermeiden, dass die erste Elektromaschine 5 an ihre Systemgrenze stößt.

## Patentansprüche

1. Verfahren zum Betreiben eines Hybridantriebs (1) eines Kraftfahrzeugs, der eine Brennkraftmaschine (3) und eine erste Elektromaschine (5) aufweist, welcher Hybridantrieb (1) auf eine Sollmomentvorgabe (M_{Soll,F}) ein das Kraftfahrzeug antreibendes Summen-Moment (M_{Ges,Ist}) erzeugt, wobei in einem, während einer Änderung der Sollmomentvorgabe (M_{Soll, F}) um einen Wert (ΔM_{Soll}) erfolgenden Instationärbetrieb das Summen-Moment (M_{Ges,Ist}) durch Aufsummieren eines von der Brennkraftmaschine (3) erzeugten Antriebsmoments (M_{1,Ist}) und eines von der ersten Elektromaschine (5) erzeugten Antriebsmoments (M_{2,Ist}) erzeugt wird, wobei zumindest eine zweite Elektromaschine (7) vorgesehen wird, die während des Instationärbetriebs zur Erzeugung des Summen-Moments (M_{Ges}, ist) der Brennkraftmaschine (3) und der ersten Elektromaschine (5) zugeschaltet wird, **dadurch gekennzeichnet, dass** die zweite Elektromaschine (7) zu Beginn des Instationärintervalls (Δt) um einen Zeitversatz (Δt₁) zeitverzögert nach Aktivierung der ersten Elektromaschine (5) zugeschaltet wird oder das Antriebsmoment (M_{3,Ist}) der zweiten Elektromaschine (7) mit Bezug auf das von der ersten Elektromaschine (5) erzeugte Antriebsmoment (M_{2,Ist}) um den Zeitversatz (Δt₁) zeitverzögert ansteigt, und dass die zweite Elektromaschine (7) am Ende des Instationärintervalls (Δt) gegenüber der ersten Elektromaschine (5) mit einem Zeitversatz (Δt₂) vorauseilend deaktiviert wird oder das Antriebsmoment (M_{3,Ist}) der zweiten Elektromaschine (7) mit Bezug auf das von der ersten Elektromaschine (5) erzeugte Antriebsmoment (M_{2,Ist}) um den Zeitversatz (Δt₂) vorauseilend abfällt.

2. Verfahren nach Anspruch 1, **dadurch gekennzeichnet, dass** mit der zweiten Elektromaschine (7) ein Antriebsmoment (M_{3,Ist}) erzeugt wird, das zur weiteren Reduzierung eines Instationärzeitintervalls (Δt), in dem der Instationärbetrieb erfolgt zusammen mit den Antriebsmomenten (M_{1,Ist}, M_{2,Ist}) der Brennkraftmaschine (3) und der ersten Elektromaschine (5) zu dem Summen-Moment (M_{Ges,Ist}) aufsummiert wird.

3. Verfahren nach Anspruch 1 oder 2, **dadurch gekennzeichnet, dass** die Brennkraftmaschine (3) und die erste Elektromaschine (5) einen Achsantrieb, insbesondere einen Achsantrieb für eine Vorderachse (11), des Kraftfahrzeugs bilden, bei dem die Brennkraftmaschine (3) und die erste Elektromaschine (5) über ein gemeinsames Getriebe (9) abtreiben.

4. Verfahren nach Anspruch 1, 2 oder 3, **dadurch gekennzeichnet, dass** die zweite Elektromaschine (7) unabhängig und/oder mechanisch entkoppelt von der ersten Elektromaschine (5) und der Brennkraftmaschine (3) einen Achsantrieb, insbesondere einen Achsantrieb für eine Hinterachse (13), bildet.

5. Verfahren nach einem der vorhergehenden Ansprüche, **dadurch gekennzeichnet, dass** die erste und/oder zweite Elektromaschine (5, 7) vor und/oder nach dem Instationärintervall (Δt) im Schubbetrieb oder Rekuperationsbetrieb betrieben wird oder deaktiviert ist, und/oder das von dem Hybridantrieb (1) erzeugte Summen-Moment (M_{Ges,Ist}) vor und/oder nach dem Instationärintervall (Δt) durch das Antriebsmoment (M_{1,Ist}) der Brennkraftmaschine (3) und/oder der ersten Elektromaschine (5) und/oder der zweiten Elektromaschine (7) gebildet ist.

6. Verfahren nach einem der vorhergehenden Ansprüche, **dadurch gekennzeichnet, dass** eine Steuereinrichtung (15) zur Ansteuerung der Brennkraftmaschine (3), der ersten Elektromaschine (5) und der zweiten Elektromaschine (7) jeweils zugehörige erste bis dritte Soll-Momente (M_{1,Soll}, M_{2,Soll}, M_{3,Soll}) berechnet, und zwar insbesondere auf Basis eines Betriebszustandes der Brennkraftmaschine (3), der ersten Elektromaschine (5) und/oder der zweiten Elektromaschine (7).

7. Verfahren nach Anspruch 6, **dadurch gekennzeichnet, dass** die Steuereinrichtung (15) die ersten bis dritten Soll-Momente (M_{1,Soll}, M_{2,Soll}, M_{3,Soll}) in Abhängigkeit wenigstens eines mittels eines Sensors (17) bestimmten Parameters, insbesondere eines Gaspedalwegs (a), berechnet.

8. Verfahren nach Anspruch 6 oder 7, **dadurch gekennzeichnet, dass** die Steuereinrichtung (15) die ersten bis dritten Soll-Momente (M_{1,Soll}, M_{2,Soll}, M_{3,Soll}) in Abhängigkeit eines durch eine Geschwindigkeitsregelanlage (19), insbesondere mit Abstandseinhaltung, ermittelten Parameters (b) berechnet.

9. Verfahren nach einem der vorhergehenden Ansprüche, **dadurch gekennzeichnet, dass** die ersten bis dritten Soll-Momente (M_{1,Soll}, M_{2,Soll}, M_{3,Soll}) durch wenigstens einen festgelegten oder von der Steuereinrichtung (15) berechneten Grenzwert (GW) begrenzt ist.

10. Verfahren nach Anspruch 9, **dadurch gekennzeichnet, dass** der Grenzwert (GW) von der Steuereinrichtung (15) in Abhängigkeit wenigstens eines mittels eines Sensors (21, 23, 25) bestimmten Parameters, insbesondere einer Temperatur (T_{B}) eines Energiespeichers, eines Ladezustands (L_{B}) eines Energiespeichers oder einer Temperatur (T_{E}) einer Leistungselektronik, berechnet wird.

## Claims

1. Method for operating a hybrid drive (1) of a motor vehicle which comprises an internal combustion engine (3) and a first electric machine (5), said hybrid drive (1), in response to a torque setpoint (M_{Soll, F}), generating a composite torque (M_{Ges,Ist}) which drives the motor vehicle, while in a transient operation occurring during a change in the torque setpoint (M_{Soll, F}) by a value (ΔM_{Soll}), the composite torque (M_{Ges,Ist}) is generated by adding together a drive torque (M_{1,Ist}) generated by the internal combustion engine and a drive torque (M_{2,Ist}) generated by the first electric machine (5), at least one second electric machine (7) being provided, which is switched on during the transient operation in order to generate the composite torque (M_{Ges,Ist}) of the internal combustion engine (3) and the first electric engine, **characterised in that** at the start of the transient period (Δt) the second electric machine (7) is switched on with a time delay by a time offset (Δt₁) after activation of the first electric machine (5), or the drive torque (M_{3,Ist}) of the second electric machine (7) increases with a time delay by the time offset (Δt₁) with respect to the drive torque (M_{2,Ist}) generated by the first electric machine (5), and **in that**, at the end of the transient period (Δt), the second electric machine (7) is deactivated in advance of the first electric machine (5) by a time offset (Δt₂), or the drive torque (M_{3, Ist}) of the second electric machine (7) decreases in advance by a time offset (Δt₂) with respect to the drive torque (M_{2,Ist}) generated by the first electric machine (5).

2. Method according to claim 1, **characterised in that** the second electric machine (7) generates a drive torque (M_{3, Ist}) which is added together with the drive torques (M_{1,Ist}, M_{2,Ist}) of the internal combustion engine (3) and of the first electric machine (5) to give the composite torque (M_{Ges,Ist}) in order to further reduce a transient time period (Δt) in which the transient operation occurs.

3. Method according to claim 1 or 2, **characterised in that** the internal combustion engine (3) and the first electric machine (5) form an axle drive, particularly an axle drive for a front axle (11), of the motor vehicle, in which the driving is done by the internal combustion engine (3) and the first electric machine (5) via a common transmission (9).

4. Method according to claim 1, 2 or 3, **characterised in that** the second electric machine (7), independently and/or mechanically uncoupled from the first electric machine (5) and the internal combustion engine (3), form an axle drive, particularly an axle drive for a rear axle (13).

5. Method according to one of the preceding claims, **characterised in that** the first and/or second electric machine (5, 7) is operated in coasting mode or recuperation mode or is deactivated before and/or after the transient period (Δt), and/or the composite torque (M_{Ges,Ist}) generated by the hybrid drive (1) is formed before and/or after the transient period (Δt) by the drive torque (M_{1,Ist}) of the internal combustion engine (3) and/or of the first electric machine (5) and/or of the second electric machine (7).

6. Method according to one of the preceding claims, **characterised in that** a control device (15) for actuating the internal combustion engine (3), the first electric machine (5) and the second electric machine (7) calculates associated first to third setpoint torques (M_{1,Soll}, M_{2,Soll}, M_{3,Soll}) based particularly on an operating state of the internal combustion engine (3), the first electric machine (5) and/or the second electric machine (7).

7. Method according to claim 6, **characterised in that** the control device (15) calculates the first to third setpoint torques (M_{1,Soll}, M_{2,Soll}, M_{3,Soll}) as a function of at least one parameter determined by means of a sensor (17), particularly the travel (a) of an accelerator pedal.

8. Method according to claim 6 or 7, **characterised in that** the control device (15) calculates the first to third setpoint torques (M_{1,Soll}, M_{2,Soll}, M_{3,Soll}) as a function of a parameter (b) determined by a speed regulating apparatus (19), particularly one that maintains a spacing.

9. Method according to one of the preceding claims, **characterised in that** the first to third setpoint torques (M_{1,Soll}, M_{2,Soll}, M_{3,Soll}) are limited by at least one threshold value (GW) that has been determined or calculated by the control device (15).

10. Method according to claim 9, **characterised in that** the threshold value (GW) is calculated by the control device (15) as a function of at least one parameter determined by means of a sensor (21, 23, 25), particularly a temperature (T_{B}) of an energy store, a charge state (L_{B}) of an energy store or a temperature (T_{E}) of power electronics.

## Revendications

1. Procédé permettant de faire fonctionner un dispositif moteur hybride (1) d'un véhicule automobile qui comporte un moteur à combustion interne (3) et un premier moteur électrique (5), lequel dispositif moteur hybride (1) produit un couple total (M_{Ges,Ist}) entraînant le véhicule automobile en réaction à une prescription de couple de consigne (M_{Soll,F}),
selon lequel, dans un mode de fonctionnement instationnaire s'effectuant autour d'une valeur (ΔM_{Soll}) pendant une modification de la prescription de couple de consigne (M_{Soll,F}), le couple total (M_{Ges,Ist}) est produit par addition d'un couple (M_{1,Ist}) produit par le moteur à combustion interne (3) et d'un couple (M_{2,Ist}) produit par le premier moteur électrique (5),
selon lequel il est prévu au moins un deuxième moteur électrique (7) qui est branché pendant le mode de fonctionnement instationnaire pour la production du couple total (M_{Ges,Ist}) du moteur à combustion interne (3) et du premier moteur électrique (5),
**caractérisé en ce que** le deuxième moteur électrique (7) est branché au début de l'intervalle instationnaire (Δt) avec un retard (Δt₁) après l'activation du premier moteur électrique (5) ou le couple (M_{3,Ist}) du deuxième moteur électrique (7) augmente avec un retard (Δt₁) par rapport au couple (M_{2,Ist}) produit par le premier moteur électrique (5)
et **en ce que** le deuxième moteur électrique (7) est désactivé à la fin de l'intervalle instationnaire (Δt) avec une avance temporelle (Δt₂) par rapport au premier moteur électrique (5) ou le couple (M_{3,Ist}) du deuxième moteur électrique (7) diminue avec une avance temporelle (Δt₂) par rapport au couple (M_{2,Ist}) produit par le premier moteur électrique (5).

2. Procédé selon la revendication 1, **caractérisé en ce que** l'on produit avec le deuxième moteur électrique (7) un couple (M_{3,Ist}) qui, pour réduire encore un intervalle instationnaire (Δt) dans lequel le mode de fonctionnement instationnaire s'effectue, est ajouté aux couples (M_{1,Ist}, M_{2,Ist}) du moteur à combustion interne (3) et du premier moteur électrique (5) pour donner le couple total (M_{Ges,Ist}).

3. Procédé selon la revendication 1 ou 2, **caractérisé en ce que** le moteur à combustion interne (3) et le premier moteur électrique (5) forment un entraînement d'essieu, notamment un entraînement d'essieu avant (11), du véhicule automobile, selon lequel le moteur à combustion interne (3) et le premier moteur électrique (5) entraînent par l'intermédiaire d'une transmission commune (9).

4. Procédé selon la revendication 1, 2 ou 3, **caractérisé en ce que** le deuxième moteur électrique (7) forme un entraînement d'essieu, notamment un entraînement d'essieu arrière (13), de manière indépendante ou mécaniquement découplée du premier moteur électrique (5) et du moteur à combustion interne (3).

5. Procédé selon l'une des revendications précédentes, **caractérisé en ce que** le premier et/ou le deuxième moteur électrique (5, 7) est désactivé ou mis en fonctionnement en mode de décélération ou en mode de récupération avant et/ou après l'intervalle instationnaire (Δt) et/ou **en ce que** le couple total (M_{Ges,Ist}) produit par le dispositif moteur hybride (1) est formé avant et/ou après l'intervalle instationnaire (Δt) par le couple (M_{1,Ist}) du moteur à combustion interne (3) et/ou du premier moteur électrique (5) et/ou du deuxième moteur électrique (7).

6. Procédé selon l'une des revendications précédentes, **caractérisé en ce qu'**un dispositif de commande (15) destiné à la commande du moteur à combustion interne (3), du premier moteur électrique (5) et du deuxième moteur électrique (7) calcule respectivement un premier, un deuxième et un troisième couple de consigne (M_{1,Soll}, M_{2,Soll}, M_{3,Soll}) associé, et ce notamment sur la base d'un état de fonctionnement du moteur à combustion interne (3), du premier moteur électrique (5) et/ou du deuxième moteur électrique (7).

7. Procédé selon la revendication 6, **caractérisé en ce que** le dispositif de commande (15) calcule le premier, le deuxième et le troisième couple de consigne (M_{1,Soll}, M_{2,Soll}, M_{3,Soll}) en fonction d'au moins un paramètre déterminé au moyen d'un capteur (17), notamment une course de pédale d'accélérateur (a).

8. Procédé selon la revendication 6 ou 7, **caractérisé en ce que** le dispositif de commande (15) calcule le premier, le deuxième et le troisième couple de consigne (M_{1,Soll}, M_{2,Soll}, M_{3,Soll}) en fonction d'un paramètre (b) déterminé par un système régulateur de vitesse (19), notamment avec respect de distance.

9. Procédé selon l'une des revendications précédentes, **caractérisé en ce que** le premier, le deuxième et le troisième couple de consigne (M_{1,Soll}, M_{2,Soll}, M_{3,Soll}) sont limités par au moins une valeur limite (GW) fixée ou calculée par le dispositif de commande (15).

10. Procédé selon la revendication 9, **caractérisé en ce que** la valeur limite (GW) est calculée par le dispositif de commande (15) en fonction d'au moins un paramètre déterminé au moyen d'un capteur (21, 23, 25), notamment une température (T_{H}) d'un accumulateur d'énergie, un état de charge (L_{B}) d'un accumulateur d'énergie ou une température (T_{E}) d'une électronique de puissance.
